# EUROPEAN PATENT APPLICATION

(11) **EP 1 445 275 A1**
(43) Date of publication of application: **11.08.2004**
(21) Application number: 04001632.1
(22) Date of filing: 27.01.2004
(51) Int. Cl.: C08J 9/14, C08L 75/04

(54) **Non azeotropic mixtures of 1,1,1,3,3-pentafluorobutane**

(30) Priority: 06.02.2003 IT MI20030199
(71) Applicant: Solvay Solexis S.p.A., 20121 Milano (IT)
(72) Inventor: Nicoletti, Alberto, 20092 Cinisello B. Milano (IT); Bragante, Letanzio, 35020 Due Carrare Padova (IT)
(74) Representative: Sama, Daniele, Dr.

(57) **Abstract**

Non azeotropic mixtures of fluids to obtain polymeric foams comprising:
- HFC 365mfc in the following amounts:
   - from 5 to 7 parts by weight/100 parts of polymer in case of thermoplastic foams;
   - from 20 to 25 parts by weight/100 parts of polyol, in case of polyurethane foams;
- one or more fluorinated compounds, liquid at room temperature and having boiling point from 50°C to 150°C, having formula R'-R_{f}-R (I)
   wherein R' and R are as defined in the application.

## Description

The present invention relates to mixtures to be used as foaming agents of polymeric foams, in particular polyurethane foams.

More specifically the present invention relates to mixtures to be used as substitutes of HFC 141b to obtain polymeric foams, in particular polyurethane foams, having improved properties as regards the substantial maintenance in the time of thermoinsulating properties, in particular of the thermal conductivity.

As known, the thermosetting and thermoplastic polymeric foams are used in the cold thermal insulation and in the building industry.

It is known in the prior art to obtain stiff polyurethanes having a closed cell structure with high thermoinsulating performances by using HFC 141b-based formulations, or by technologies using cheap foaming agents, but flammable, for example pentanes, however not reaching the performances obtained with HCFC 141b.

Due to newly regulations, the HCFC use will be more and more limited since they decrease the ozone and therefore it is necessary to find substitutes to prepare foaming agents having zero ODP.

Foaming mixtures for polyurethanes, comprising hydrofluorocarbons and hydrofluoroethers are described in the prior art.

In USP 5,605,882 compositions comprising hydrofluoroethers of formula:

C_{A}F_{B}H_{2A+2-B}O_{C}

wherein A = 2.3; 3≤ B ≤8; C = 1.2;
and HFCs having formula:

C_{P}F_{T}H_{2P+2-T}

1≤ P ≤ 4; 1≤ T ≤8, are described.
In the patent it is stated that said compositions can be used as foaming agents for polyolefins and polyurethanes. Said compositions are azeotropic or near aqeotropic, i.e. the mixture of the two components has a constant or substantially constant boiling point. The description of this patent is limited to the use of compositions formed of compounds, having formulas as above, when they form, as said, azeotropic or near azeotropic compositions. In the patent there is no indication on the use, for the preparation of polyurethane foams, of hydrofluorocarbon and hydrofluoroether mixtures not forming azeotropic or near azeotropic compositions.

USP 6,380,275 describes a method to prepare polyurethane or thermoplastic foams containing pentafluorobutane, preferably 1,1,1,3,3-pentafluorobutane (HFC-365mfc) and at least a second low boiling foaming agent, selected from hydrocarbons, optionally halogenated, ethers and halogenated ethers, HFC-32, HFC-152a, HFC-134, HFC-245fa, HFC-236ea, HFC-236fa, HFC-227ea. In the patent no indication is given as regards the used halogenated ethers, only the dimethylether is mentioned without giving any example.

It is also known in the literature, see the publication by A. Albouy et Al. "A status report on the development of HFC blowing agent for rigid polyurethane foams" in "Proceedings world congress '97, Sept. 29-Oct. 1, 1997" pages 514-523, that HFC 365mfc is a drop-in substitute of HFC 141b. However the thermoinsulating properties of the polymeric foams obtained with HFC 365mfc decrease in the time. See the above publication.

The need was felt to have available mixtures comprising HFC 365mfc, to be used in substitution of HFC 141b to obtain polymeric foams, in particular polyurethane foams, having improved properties as regards the substantial maintenance in the time of the thermoinsulating properties, in particular of the thermal conductivity.

The Applicant has surprisingly and unexpectedly found it is possible to solve this technical problem by using near-azeotropic or like-azeotropic mixtures of HFC 365mfc with other fluorinated compounds as defined below.

An object of the present invention is near-azeotropic or like-azeotropic mixtures, to be used for preparing polymeric foams, in particular polyurethane foams, comprising:
- HFC 365mfc, having formula CF₃-CH₂-CF₂-CH₃, from 5 to 8 parts by weight/100 parts of polymeric foam;
- one or more fluorinated compounds, liquid at room temperture and having boiling point from 50°C to 150°C, preferably from 60°C to 130°C, having formula

   R' -R_{f}-R (I)

   wherein:
   R' is (O)ₙ₀ -CₙF₂ₙH, - (O)ₙ₀ -CₙH₂ₙ₊₁, n being an integer from 1 to 4, preferably 1 or 2; n0 is equal to 0, 1;
   R is: -CₙF₂ₙH, -CₘF₂ₘ₊₁; wherein
      - in the end groups R, R' one fluorine atom is optionally substituted with one chlorine atom;
      - n is as above; m is an integer from 1 to 3;
   R_{f} is:
      - linear or branched when possible perfluoroalkylene, from 2 to 12 carbon atoms, preferably from 3 to 12 carbon atoms, containing at least one ether oxygen atom, when R_{f} has this meaning n0 in R' is preferably equal to zero;
      - perfluoropolyoxyalkylene comprising units statistically distributed in the chain, the chain being formed of at least two carbon atoms, said units selected from at least one of the following:
         - (CFXO) wherein X = F or CF₃;
         - (CF₂(CF₂)_{d}O) wherein d is an integer comprised between 1 and 3;
         - (C₃F₆O) ;
         when R_{f} is perfluoropolyoxyalkylene n0 in R' is preferably equal to 1.

The ratio by weight of the compounds of formula (I) to the HFC 365mfc weight ranges from 0.005 to 0.1, preferably from 0.01 to 0.08.

The total amount of the compounds of formula (I) is from 0.07% to 0.55% in per cent by weight on the final manufactured article.

For polyurethane foams, the totl amount of the compounds of formula (I) ranges from 0.2 to 1.5 parts by weight referred to 100 parts by weight of polyol, HFC 365mfc ranges from 20 to 25 parts by weight/100 parts by weight of polyol, corresponding to from 0.135 to 0.169 moles/100 parts by weight of polyol in the case of polyurethane foams.

The above compounds of formula (I) generally have a molecular weight from 230 to 500, preferably from 250 to 450. When perfluoropolyoxyalkylene polymeric units are present, molecular weight means the number average molecular weight.

The (C₃F₆O) unit in R_{f} of formula (I) has the following meanings: (CF₂CF(CF₃)O), (CF(CF₃)CF₂O).

Preferably in formula (I) R is a group selected from the following: -CF₂H, -CF₂CF₂H, -CFHCF₃.

When in formula (I) there is one hydrogen atom in each end group and R_{f} is a perfluoropolyoxyalkylene, the compounds are known as α, ω-dihydro-perfluoropolyethers.

When in formula (I) R' is alkyl, R is perfluoroalkyl and R_{f} is perfluoroalkylene containing at least one oxygen atom, the compounds are also known as ω-hydro-fluoroethers.

In the fluids of formula (I) preferably R_{f} = (per)fluoropolyether chain with n0 of R' equal to 1, R_{f} preferably has one of the following structures:
1) -(CF₂O)ₐ- (CF₂CF₂O)_{b}-
   a and b being integers; when a is different from zero, then b/a is comprised between 0.3 and 10, extremes included; when a is equal to zero b is an integer as defined below;
   with R in formula (I) = -CₙF₂ₙH;
2) - (CF₂- (CF₂)_{z'} -CF₂O)_{b'}-
   wherein z' is an integer equal to 1 or 2; b' is as defined below;
3) - (C₃F₆O)ᵣ - (C₂F₄O)_{b} - (CFL₀O)ₜ -
   L₀ = -F, -CF₃;
   r, b and t being integers; when b and t are different from zero r/b = 0.5-2.0, (r+b) / t = 10-30 and all the units having r, b, and t indexes are present;
   or b = t = 0 and r satisfies the proviso indicated below;
   or b = 0 and r and t are different from zero;
   a, b, b', r, t, are integers whose sum is such that the compound of formula (I) containing the bivalent R_{f} radical has respectively boiling point and molecular weight comprised in the corresponding above ranges.

The formula (I) fluids can be selected for example from the following:
- HCF₂O (CF₂CF₂O)_{1,8} (CF₂O)_{1,4}CF₂H
- HCF₂O (CF₂CF₂O)₂ (CF₂O)_{0,7} CF₂H
- HCF₂O (CF₂CF₂O)₃ (CF₂O)_{0,4} CF₂H
- CF₃O (CF₂CF₂O)₂ CF₂H
- CF₃O (CF₂CF₂O)₂ (CF₂O) CF₂H
- CF₃O (CF₂CF (CF₃)O)₂ CF₂H
- HCF₂CF₂O (CF₂CF₂O) CF₂CF₂H
- HCF₂CF₂OCF₂C(CF₃)₂CF₂OCF₂CF₂H
- CF₃(CF₂)₅OCF₂CF₂H
- CF₃(CF₂)₆OCF₂H
- HCF₂O (CF₂O) (CF₂CF₂O) CF₂H
- HCF₂O (CF₂O) (CF₂CF₂O)₂CF₂H
- HCF₂O(CF₂CF₂O)₂CF₂H
- HCF₂O (CF₂O)₂ (CF₂CF₂O) CF₂H
- CF₃(CF₂)₃OCH₃
- CF₃(CF₂)₃OC₂H₅
- CF₃(CF₂)₆OC₂H₅

Preferably the used compounds of formula (I) are selected from the following:
- HCF₂O (CF₂O) (CF₂CF₂O) CF₂H
- HCF₂O (CF₂O) (CF₂CF₂O)₂CF₂H
- HCF₂O (CF₂CF₂O)₂CF₂H
- HCF₂O (CF₂O)₂ (CF₂CF₂O) CF₂H
- CF₃(CF₂)₃OCH₃
- CF₃(CF₂)₃OC₂H₅
- CF₃(CF₂)₆OC₂H₅

It is possible to use mixtures of the compounds of formula (I) .

In the mixture according to the present invention the HFC 365 mfc amount can be partially substituted, up to 50% by weight of HFC 365 mfc, by co-foaming agents selected from the following:
- hydrofluorocarbons selected from HFC 134a 1,1,1,2 tetrafluoroethane CH₂F-CF₃, HFC 227ea 1,1,1,2,3,3,3 heptafluoropropane CF₃-CHF-CF₃;
- hydrocarbons having 5-6 carbon atoms, selected from the following: n-pentane, cyclopentane, isopentane, n-hexane.

The amount by weight of the invention composition in the polymeric foam is generally in the range 5-10% by weight with respect to the polymeric foam.

The fluorinated compounds of formula (I) can be prepared according to the methods described in patents US 3,704,214, US 3,715,378, WO 95/32174 and US 5,969,192.

The Applicant has found that HFC 365mfc does not form azeotropic or near azeotropic compositions with the hydrofluoroethers of formula (I). See the Examples.

Therefore it is surprising and unexpected the use of the present invention compositions to prepare the polymeric foams, maintaining in the time the thermoinsulating properties as above. As said, the foaming invention compositions can be used for thermoplastic and thermosetting polymeric foams, they are preferably used for polyurethane foams.

Polyurethanes are polymers produced by reaction of polyols with isocyanates, with formation of urethane bonds. The reaction takes place in the presence of other compounds, as surfactants and catalysts. When the isocyanate is in excess and in the presence of water (polyisocyanurates) form urethane and ureic bonds, the latter giving more stiff and fire-resistant mixed structures. Usually the polyol mixture at a pressure slightly higher of atmospheric one, additioned with the necessary additives and with the foaming agent (mixture called side B), is mixed with isocyanates (mixture called side A). The mixing takes place in a mixer providing to pour the reactants (polyols, isocyanates and foaming agent) where it is desired to produce the foam. In a more recent but less used technology, when the foaming agent is poor soluble at atmospheric pressure and an increase of its solubilization in polyols is not compatible with the resistance to pressure of the storage and. feeding lines, it is sent liquid and under pressure to the mixer, separately from the polyols. This technology allows to increase the amount'of poor soluble foaming agent present in the foam with respect to the preceding technology.

It is known to prepare a stiff polyurethane foam it is necessary to mix the following components:
- Polyols, or their mixtures having hydroxyl number, expressed in mg_{KOH}/g from 300 to 1,000, in particular from 300 to 70.0, and hydroxyl functionality (hydroxyl number/polyol mole) from 2 to 8, in particular from 3 to 8.
   Said polyols are described in the prior art and include alkylen-oxide reaction products, for example ethylene or propylene oxides, with initiators containing from 2 to 8 active hydrogen atoms per molecule. Examples of initiators are: glycerol, trimethylolpropane, triethanolamine, pentaerythrol, sorbitol and saccharose, polyamines and aminoalcohols.
   Polymeric polyols suitable to the purpose can be obtained by condensation reaction in suitable ratios of glycols or polyols having a higher functionality with bicarboxylic or polycarboxylic acids.
   Other polymeric polyols include products having hydroxyl end groups belonging to the classes of polythioethers, polyesteramides, polycarbonates, polyacetals, polyolefins and polysiloxanes.
- Isocyanates: usable polyisocyanates are for example aliphatic, cycloaliphatic, arilaliphatic and aromatic polyisocyanates. Of particular importance are the aromatic diisocyanates as diphenylmethandiisocyanate (MDI) and its derivatives; polymethylen-polyphenylen-polyisocyanate (polymeric MDI). Polyisocyanates having functionality from 2.4 to 3.0 and in particular from 2.4 to 2.9 are preferably used.
- Surfactants, as for example the usual silicone surfactants and siloxane-oxyalkylene copolymers.
- Catalysts, as for example the tin compounds such as for example tin octoates and dibutyltindilaurate; tertiary amines as dimethyl-cyclohexyl-amine or triethylen-diamine.
- Flame retardants, as for example halogenated alkylphosphates as trichloro-propyl-phosphate.
- H₂O: the water reaction with isocyanate develops CO₂, it is to be summed to the foaming agents contained in the foamed closed cells. The water amount is generally in the range 0.5-2.0 parts by weight, in particular 1.25-1.5 parts by weight, for 100 parts by weight of polyols.

The hydrofluoroethers used in the composition of the present invention are soluble in the polyols used for the preparation of polyurethanes, and are chemically inert compounds, they are neither foaming agents nor cell size modifiers. Indeed, by using the present invention composition, the cell sizes of the polyurethane foam are not substantially different from those of the polymeric foam obtained with HFC 365mfc alone. See the Examples.

Surprisingly, as said, the addition of the formula (I) compounds allows to decrease the thermal conductivity of polymeric foams and to substantially limit the increase occurring with λ-aging. From an industrial point of view it is very important to limit the ageing phenomenon of polymeric foams, in particular polyurethane foams, to maintain in the time the insulating power of the manufactured article.

The ageing is common to all foamed polymers formed of stiff cells containing thermally insulating gases. For example PURs (polyurethanes), PIRs (polyisocyanurates), XPS (foamed polystyrene), PE (polyethylene), etc. can be mentioned. The ageing is due to the loss of the insulating gas from the polymeric foam cells, which is gradually substituted by air having a higher thermal conductivity value. Therefore the thermoinsulating properties of the manufactured article gradually worsen.

The Applicant has found that by using mixtures formed of HFC 365 mfc and hydrofluoroethers having boiling point from 30°C to 40°C as co-foaming agents, it is possible to obtain polyurethane foams, however they do not maintain in the time the thermoinsulating properties.

The present invention composition can also be used for the preparation of thermoplastic foams, for example for materials as polystyrene and polyethylene.

The foaming agent amount in the termoplastic foam is generally in the range 5-10% by weight with respect to the polymer.

The present invention mixture allows to keep in one vessel the compounds used to prepare the polymeric foams, except the isocyanate reactant. This is an advantage since the mixture can be maintained ready up to the use. From an industrial point of view there is the further advantage that said polymeric foams can be produced by using equipments not operating under pressure and therefore requiring lower investments.

The following Examples illustrate the invention with non limitative purposes.

### EXAMPLES

### Primary products used in the Examples

### a) Polyols

The following hydrogenated polyols have been used:
- RN® 490 (Dow Chemical) : polyol polyester having hydroxyl number = 490 mg KOH/g.
- Tercarol® G 310 (Enichem): polyol polyether having an hydroxyl number = 600 mg KOH/g.
- Tercarol® G 600 (Enichem): polyol polyether having an hydroxyl number = 290 mg KOH/g.
- Isoexter® 4530 (Coim): aromatic polyol polyester having an hydroxyl number = 510 mg KOH/g.
- Isoexter® 3340 (Coim): aliphatic-aromatic polyol polyester having an hydroxyl number = 360 mg KOH/g.
- Glendion® RS 0700 (Enichem): polyol polyester having an hydroxyl number = 490 mg KOH/g.

### b) Silicone surfactants

- Tegostab® B8465 (Goldschmidt) polysiloxane-polyoxyalkylenalkylate polymer.
- RT® 0073 (Cem. Spec.) polysiloxane-polyoxyalkylenalkylate polymer.

### c) Catalysts

- Policat® 8 (Air Product) DMCEA (dimethylcyclohexylamine).
- Policat® 5 (Air Product) PMDETA (pentamethyl diethylen triamine).

### d) Physical blowing agents

- HFC 134a (Ausimont S.p.A.) CH₂F-CF₃.
- Methylal or dimethoxymethane (Lambiotte & Cie S.A.)

### e) Polyisocyanates

MDI Tedimon® 385 (Enichem SpA) polymeric isocyanate with NCO % = 30.5, average functionality = 2.8.

### Phisical-determinations on the polyurethane foam

- Apparent density: ISO 845 method.
- Thermal conductivity: ISO 8301 and ASTM C518 methods. The determination has been carried out after conditionning for one day at 23°C and 50% of relative humidity. The maximum difference between the experimentally determined value and the real value is not higher as absolute value than 0.20 mW/m.K.
- Determination of the cell sizes and of the cellular size distribution by Scanning Electron Microscopy (SEM). Thin sections of a representative foam zone are cut out so as to obtain surfaces having area of some cm². The cutting operation produces surfaces on which a distribution of open cells having a beehive structure can be noticed. On the surface an atomized metal is sprayed so as to have a thickness of 20 nm. The specimens are then analyzed by SEM.

### General process for the polyurethane foam preparation

The general process for the laboratory preparation of polyurethane and polyisocyanurate foams is described in "Polyurethanes Chemistry and Technology" Volumes I, II, Saunders and Frisch, 1962, John Wiley and Sons, New Jork, N.J.

150 grams of polyols have been additivated and mixed, without particular cautions, in an open vessel with surfactants, catalysts, H₂O and HFC 365mfc at the concentrations reported in Table I.

The H₂O and HFC 365mfc amounts reported in Table I have been calculated for obtaining foams having an apparent density of about 35 Kg/m³, a density in the commercial foam range (30-36 Kg/m³).

120 grams of the so prepared liquid mixture were then poured in a cylindrical polyethylene vessel put under the environment conditions and having 12 cm diameter and 18 cm height. The polyisocyanate was added to the liquid according to the ratios by weight indicated in Table I and then was subjected to mechanical mixing for 15 seconds with a metal blade shaft, at 1,900 rpm.

The mixture was then let freely foam until reaching the maximum volume, i.e. until a further foam foaming did not occur.

The obtained foam was let mature at 70°C overnight to complete the crosslinking reactions. The specimen was then cooled at room temperature for some hours. From the polyethylene vessel some foam specimens were taken for the preparation of the specimens to be submitted to the physical, mechanical characterization reported in Tables I and II. The symbol - in Table 2 means that the determination has not been carried out.

### EXAMPLE 1 (comparative)

In this Example as physical foaming agent only HFC 365mfc has been used.

The composition is reported in Table I. The effected physical determinations are reported in Table II.

### EXAMPLES 2-6

In these Examples HFC 365mfc has been used, additioned with hydrofluoroethers selected from the following:
- α, ω di-hydro-perfluoropolyethers H-Galden®, called H-Galden® B, having average molecular weight 325, and average boiling temperature of 94.4°C (Examples 2-3).
- α, ω di-hydro-perfluoropolyethers H-Galden®, called H-Galden® C, having average molecular weight 416 and average boiling temperature of 125°C (Example 4).
- ω hydro-fluoroethers selected from the following:
   - C₄F₉-O-CH₃, Tb = 60°C (HFE® 7100, m.w. 250) (ref. Example 6);
   - (C₃F₇)₂-CF-O-C₂H₅, Tb = 128°C (HFE® 7500, m.w. 414) (ref. Example 7).

The compositions are reported in Table I. The effected physical determinations are reported in Table II.

By using the above SEM method, significant differences of the cell sizes in the polyurethane foams obtained in the Examples 2-6 with respect to the foam of the Example 1 comparative, have not been found.

### Comment to the results reported in Table II

The Table shows that the addition of methylal allows to decrease the foam density and to obtain lower thermal conductivity values, even after 35 days of conditioning.

### EXAMPLE 7 (comparative)

The Example has been carried out according to the above foam preparation general process, except that to polyols before the foaming reaction only H-Galden® C was added, in an amount by weight corresponding to the HFC 365 mfc moles used in the Examples 1-6.

The liquid mixture after polyisocyanate addition did not produce foam, neither any foaming was observed.

### EXAMPLE 8 (comparative)

Mixtures of HFC 365mfc and of additives having the same ratios by weight as those used in the Examples 2-6 were brought to boiling under atmospheric pressure. In no case formation of azeotropes was observed. Furthermore in no case formation of near azeotropic mixtures was observed.

Indeed the boiling temperature of said mixtures did not maintain constant.

### EXAMPLE 9 (comparative)

Repetition of the liquid mixture preparation of the Example 2 but using an α, ω di-hydro-perfluoropolyether having an average boiling temperature higher than 150°C.

The preparation as described for the Example 2 was repeated (concentration H-Galden® 0.28 parts by weight/100 parts by weight of polyol), but by using a α, ω di-hydro-perfluoropolyether having an average boiling temperature of 178°C.

The obtained final manufactured article showed a non homogeneous aspect owing to the reactant demixing. Furthermore the cellular structure showed big holes, very large and unhomogeneous cells. The manufactured article was not commercially usable.

### EXAMPLES 10-16 (comparative)

Use of some of the azeotropic hydrofluoroether/hydrofluorocarbon compositions described in USP 5,605,882 as foaming agents for polyurethane foams.

7 different azeotropic hydrofluoroether/hydrofluorocarbon compositions have been selected from the list reported for said compositions in Table 1, columns 10-11 of the US patent.

The compositions are reported in Table III and have been used as foaming agents for polyurethane foams.

In a cylindrical polyethylene vessel (diameter 12 cm, heigth 18 cm) there have been transferred, in sequence, 100 g polyol polyether (hydroxyl number = 500 mg of KOH eq./g) containing a silicone surfactant (1.5% by weight), 2.6 g of water, 2.5 g of N,N-dimethyl-cyclohexylamine (hydroxyl number = 500 mg of KOH eq./g) and the foaming agent amount as from Table IV. Said amount has been calculated so as to have the same number of moles of foaming agent in each Example.

This allows a comparison of the cell size distribution and of the apparent density in the foams obtained in the various Examples. The polyethylene vessel content was carefully mixed for one minute by mechanical stirrer at 1900 rpm.

170 g of polymeric methylendiphenylisocyanate (PMDI-Desmodur® 44V20 Bayer, % by weight NCO = 32.79%, number index (eq. isocyanate/eq. hydroxyl) = 1.1, hydroxyl number = 438 mg KOH eq./g) were then added.

The reaction mixture composition for each Example is reported in Table IV.

The crosslinking reaction has continued until completion, so to allow the complete foam foaming.

From the central part of each foam specimen a portion was then drawn for the visual inspection of the cell size distributiion (homogeneity) and for the apparent density determination.

The obtained results are reported in Tavle V.

The Table shows that in the azeotropic compositions of Table 1 of USP 5,605,882, compositions not utilizable as foaming agents of polymeric foams are also comprised.

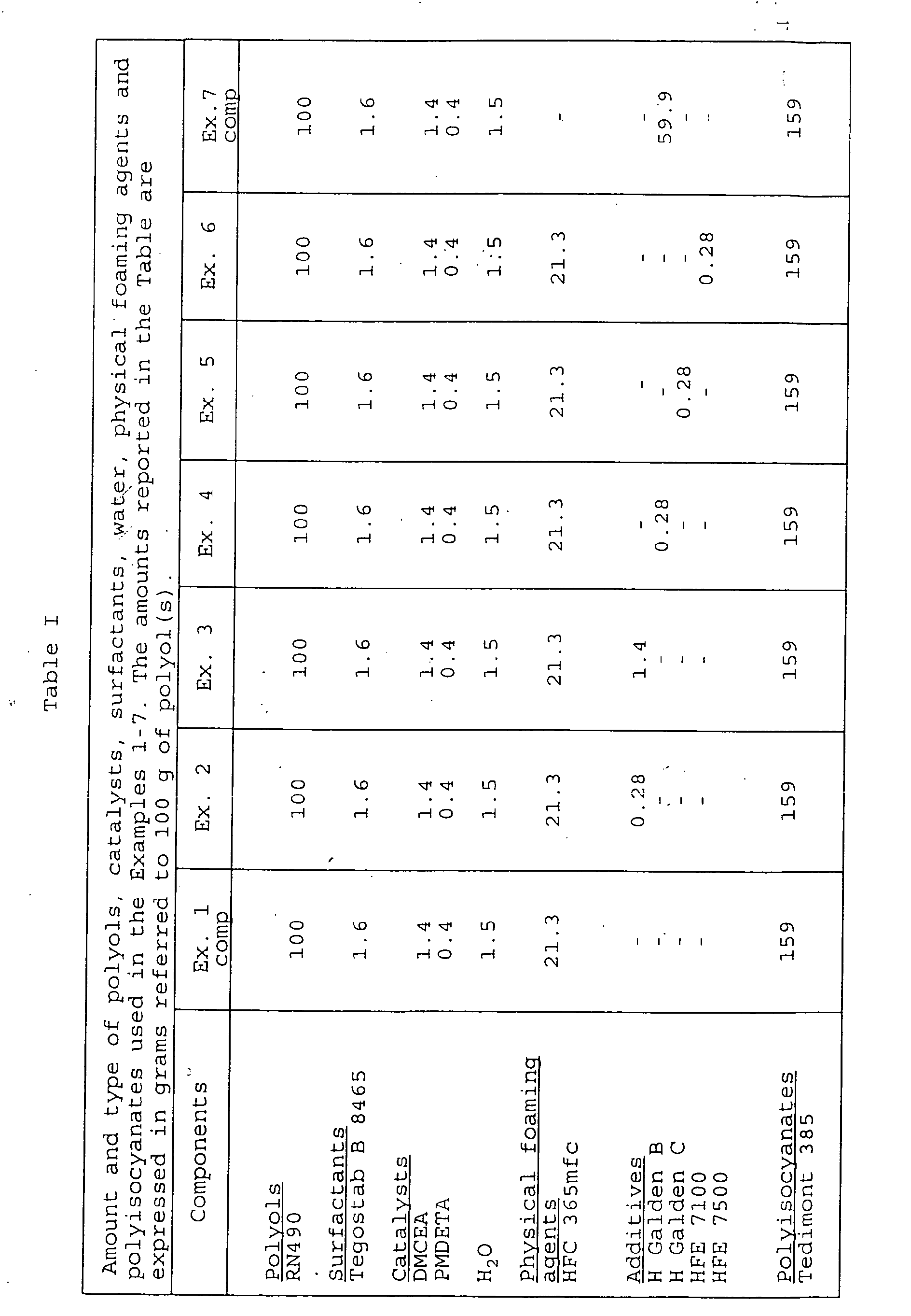

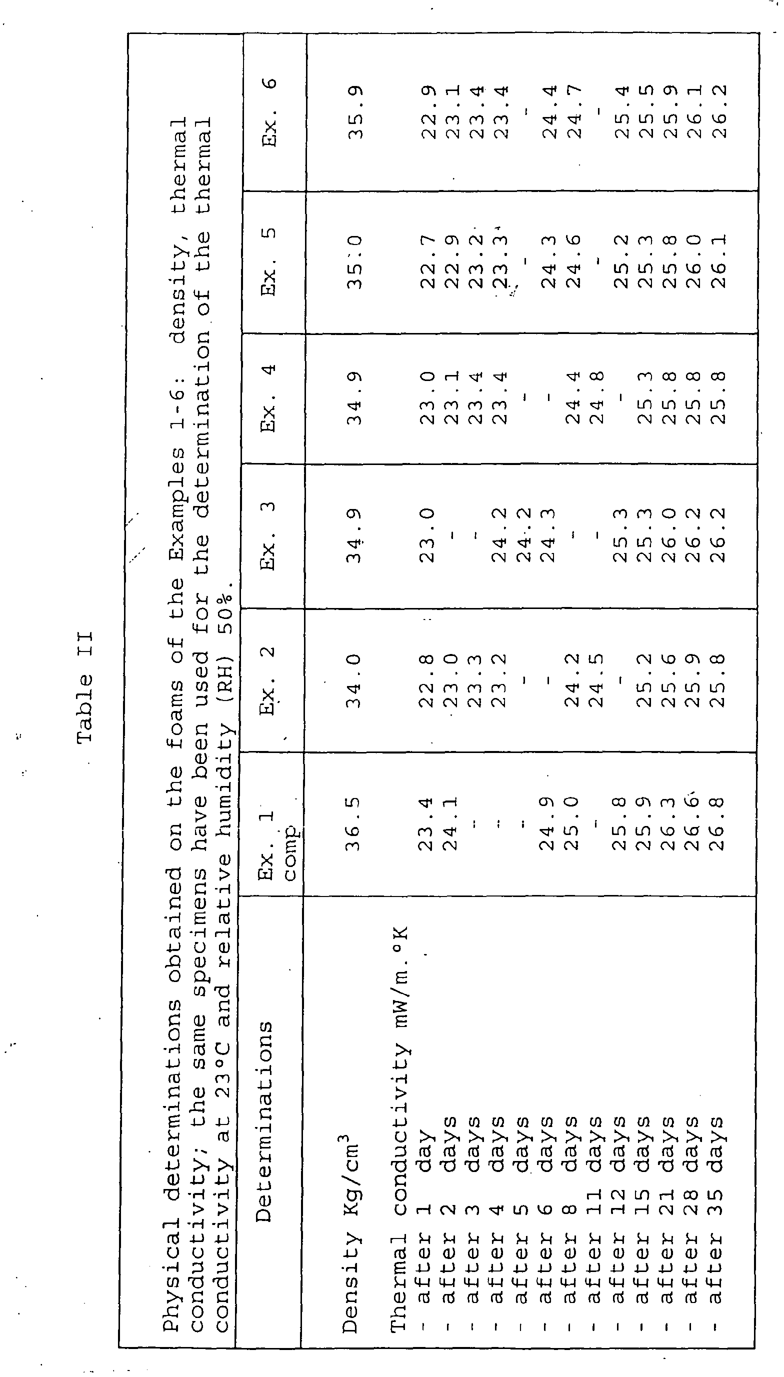

**Table III**

| Ex. Comp | Hydrofluoroethers/hydrofluorocarbons mixtures (E/HFC) | | mol. ratio E/HFC |
|---|---|---|---|
| | Component | Chemical formula | |
| 10 | 134E/HFC236ea | CHF₂OCHF₂/CF₃CHFCHF₂ | 50/50 |
| 11 | 227eaE/HFC134a | CF₃OCHFCF₃/CH₂FCF₃ | 60/40 |
| 12 | 143aE/HFC227ea | CH₃OCF₃/CF₃CHFCF₃ | 1/99 |
| 13 | 218E/HFC152a | CF₃OCF₂CF₃/CH₃CHF₂ | 50/50 |
| 14 | 236faE/HFC32 | CF₃OCH₂CF₃/CH₂F₂ | 55/45 |
| 15 | 125E/HFC32 | CHF₂OCF₃/CH₂F₂ | 70/30 |
| 16 | 116E/HFC125 | CF₃OCF₃/CHF₂CF₃ | 20/80 |

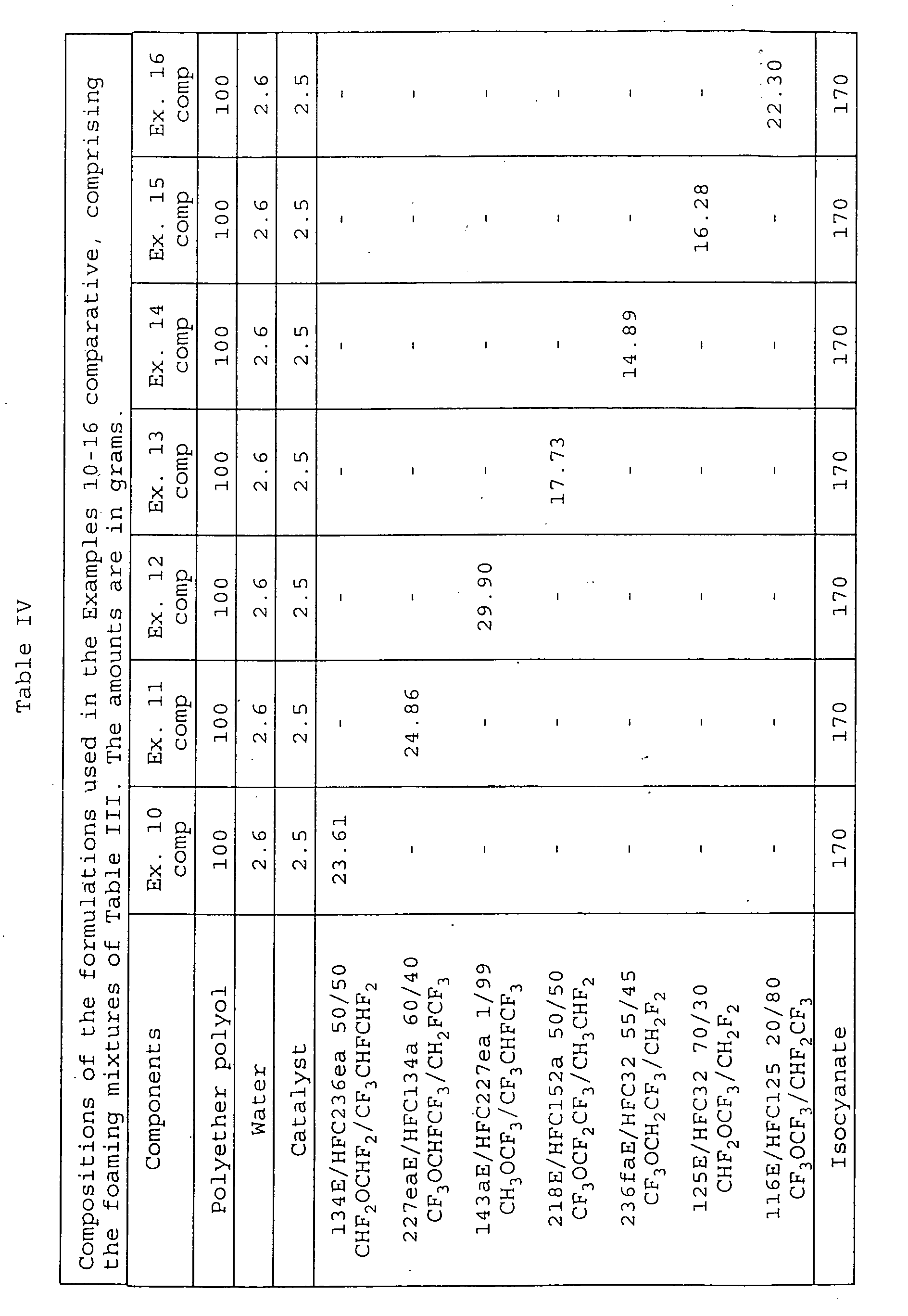

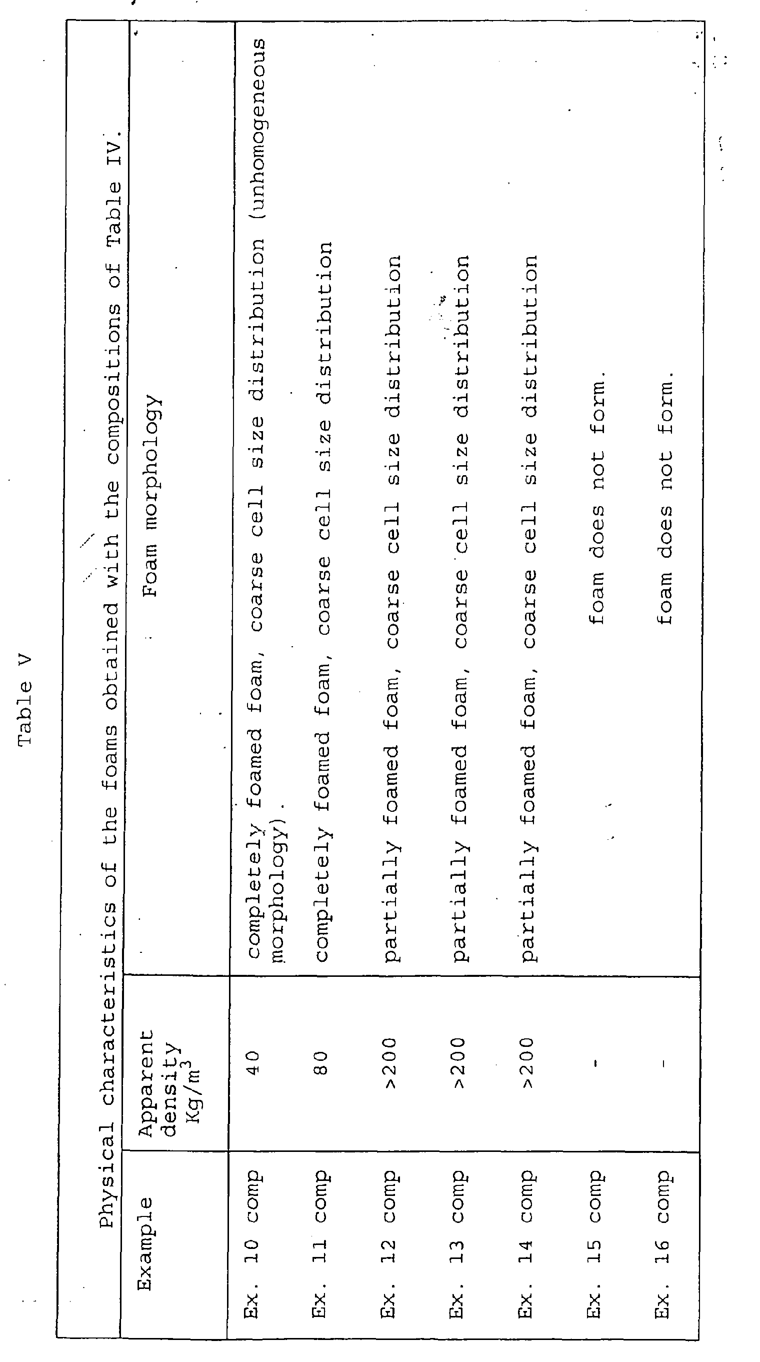

## Claims

1. Compositions of fluids for preparing polymeric foams, preferably polyurethane foams, comprising:
- HFC 365mfc from 5 to 8 parts by weight/100 parts of polymeric foam;
- one or more fluorinated compounds, liquid at room temperature and having boiling point from 50°C to 150°C, preferably from 60°C to 130°C, and having formula
R' -R_{f}-R (I)
wherein:
R' is - (O)ₙ₀ -CₙF₂ₙH, - (O)ₙ₀ -CₙH₂ₙ₊₁, n being an integer from 1 to 4, preferably 1 or 2; n0 is equal to 0, 1;
R is: -CₙF₂ₙH, -CₘF₂ₘ₊₁; wherein
- in the end groups R, R' one fluorine atom is optionally substituted with one chlorine atom;
- n is as above; m is an integer from 1 to 3;
R_{f} is:
- linear or branched when possible perfluoroalkylene, from 2 to 12 carbon atoms, preferably from 3 to 12 carbon atoms, containing at least one ether oxygen atom, when R_{f} has this meaning n0 in R' is preferably equal to zero;
- perfluoropolyoxyalkylene comprising units statistically distributed in the chain, the chain being formed of at least two carbon atoms, said units selected from at least one of the following:
- (CFXO) wherein X = F or CF₃;
- (CF₂(CF₂)_{d}O) wherein d is an integer comprised between 1 and 3;
- (C₃F₆O) ;
when R_{f} is perfluoropolyoxyalkylene n0 in R' is preferably equal to 1.

2. Compositions according to claim 1, wherein the ratio by weight of the compounds of formula (I) to the HFC 365mfc weight ranges from 0.005 to 0.1, preferably from 0.01 to 0.08.

3. Compositions according to claims 1-2, wherein for polyurethane foams, the amount of the compounds of formula (I) ranges from 0.2 to 1.5 parts by weight referred to 100 parts by weight of polyol and HFC 365mfc amount ranges from 20 to 25 parts by weight/100 parts by weight of polyol.

4. Compositions according to claims 1-3, wherein the compounds of formula (I) have a molecular weight from 230 to 500, preferably from 250 to 450.

5. Compositions according to claims 1-4, wherein the (C₃F₆O) unit in R_{f} of formula (I) is selected between
(CF₂CF(CF₃)O) or (CF(CF₃)CF₂O).

6. Compositions according to claims 1-5, wherein in formula (I) R is a group selected from the following:
- CF₂H, -CF₂CF₂H or -CFHCF₃.

7. Compositions according to claims 1-6, wherein in formula (I) n0 of R' equal to 1, R_{f} is a (per)fluoropolyether chain selected from the following structures:
1) - (CF₂O)ₐ- (CF₂CF₂O)_{b}-
a and b being integers; when a is different from zero, then b/a is comprised between 0.3 and 10, extremes included; when a is equal to zero b is an integer as defined below;
with R in formula (I) = -CₙF₂ₙH;
2) - (CF₂- (CF₂)_{z'} -CF₂O)_{b'} -
wherein z' is an integer equal to 1 or 2; b' is as defined below;
3) -(C₃F₆O)ᵣ - (C₂F₄O)_{b} - (CFL₀O)ₜ-
L₀ = -F, -CF₃;
r, b and t being integers; when b and t are different from zero r/b = 0.5-2.0, (r+b) /t = 10-30 and all the units having r, b, and t indexes are present;
or b = t = 0 and r satisfies the proviso indicated below;
or b = 0 and r and t are different from zero;
a, b, b', r, t, are integers whose sum is such that the compound of formula (I) containing the bivalent R_{f} radical has boiling point in the above range.

8. Compositions according to claims 1-7, wherein the fluids of formula (I) are selected from the following:
- HCF₂O(CF₂CF₂O)_{1,8}(CF₂O)_{1,4}CF₂H
- HCF₂O(CF₂CF₂O)₂(CF₂O)_{0,7}CF₂H
- HCF₂O(CF₂CF₂O)₃(CF₂O)_{0,4}CF₂H
- CF₃O(CF₂CF₂O)₂CF₂H
- CF₃O(CF₂CF₂O)₂(CF₂O)CF₂H
- CF₃O(CF₂CF(CF₃)O)₂CF₂H
- HCF₂CF₂O (CF₂CF₂O) CF₂CF₂H
- HCF₂CF₂OCF₂C (CF₃)₂CF₂OCF₂CF₂H
- CF₃(CF₂)₅OCF₂CF₂H
- CF₃(CF₂)₆OCF₂H
- HCF₂O(CF₂O) (CF₂CF₂O)CF₂H
- HCF₂O(CF₂O) (CF₂CF₂O)₂CF₂H
- HCF₂O(CF₂CF₂O)₂CF₂H
- HCF₂O(CF₂O)₂(CF₂CF₂O)CF₂H
- CF₃(CF₂)₃OCH₃
- CF₃(CF₂)₃OC₂H₅
- CF₃(CF₂)₆OC₂H₅

9. Compositions according to claim 8, wherein the fluids of formula (I) are selected from the following:
HCF₂O (CF₂O) (CF₂CF₂O) CF₂H, HCF₂O (CF₂O) (CF₂CF₂O) ₂CF₂H, HCF₂O (CF₂CF₂O) ₂CF₂H, HCF₂O (CF₂O) ₂ (CF₂CF₂O) CF₂H, CF₃(CF₂)₃OCH₃, CF₃(CF₂)₃OC₂H₅, CF₃(CF₂)₆C₂H₅.

10. Compositions according to claims 1-9, wherein the HFC 365mfc amount is substituted, up to 50% by weight of HFC 365mfc, by co-foaming agents selected from the following:
- hydrofluorocarbons selected from HFC 134a 1,1,1,2 tetrafluoroethane CH₂F-CF₃, HFC 227ea 1,1,1,2,3,3,3 heptafluoropropane CF₃-CHF-CF₃;
- hydrocarbons having 5-6 carbon atoms, selected from the following: n-pentane, cyclopentane, isopentane, n-hexane.

11. Polymeric foams, preferably polyurethane foams, containing in per cent by weight on the total, from 5 to 10% of the compositions of claims 1-10.

12. Foams according to claim 11, selected between the polyurethane or thermoplastic foams.

13. Use of the compositions according to claims 1-10 to prepare polymeric foams, preferably polyurethane foams.
